# EUROPEAN PATENT APPLICATION

(11) **EP 1 700 575 A1**
(43) Date of publication of application: **13.09.2006**
(21) Application number: 03815287.2
(22) Date of filing: 17.12.2003
(51) Int. Cl.: A61C 1/05

(54) **DENTAL HANDPIECE**

(30) Priority: 17.12.2003 RU 2003135401
(71) Applicant: Rogovsky, Yury Mikhailovich, Moscow 119270 (RU)
(72) Inventor: Rogovsky, Yury Mikhailovich, Moscow 119270 (RU)
(74) Representative: Manley, Nicholas Michael
(86) International application number: PCT/RU2003/000562
(87) International publication number: WO 2005/058180

(57) **Abstract**

The stomatological tip comprises a head accommodating a turbine with a means for holding a stomatological instrument and at least one hole for gas admission to the turbine, a tip body having a socket for the head to receive, a gas admission duct communicating with a gas supply line. The socket for the hole is capable of providing a complete revolution of the head, while the means for holding a stomatological instrument appears as a collet holder having a control push-button. The tip is furnished with a valve, an intermediate duct provided in the head, an additional duct provided in the tip body and having its outlet communicating with the inlet of the intermediate duct, the control push-button is accommodated inside the head. The control push-button has a surface to be pushed down and a surface for the collet holder to open, and a hollow space is confined between the inner surface of he head and the push-down surface of the control push-button, the hollow space communicating with the outlet of the intermediate duct. The gas supply line is adapted for communicating, via the valve, with the inlet of the additional duct, and the outlet of the additional duct and the inlet of the intermediate duct communicate with each other via a groove, with the head assuming any position while rotating, the groove is made on the inner surface of the socket for the head to receive, or on the outer surface of that portion of the head.

## Description

### Technical Field

The present invention relates to medical engineering and has particular reference to a stomatological tip.

### Background Art

Known from Application #96/101,748 seeking for issuing a patent of the Russian Federation and published on May 10, 1998 is a stomatological instrument comprising a head with a retainer chuck for stomatological instruments, a neck, a body, and a system of mechanical actuation for the retainer chuck, the axis of which while making an angle with the head pivot axis is adapted to form, in combination therewith and depending on the modification, the working surface from a full circle to a complete cone, said working surface having working points, when the head performs a full revolution about its own axis.

A disadvantage inherent in said known device resides in that the head body protruding transversely to a grip-body, thereby complicating manipulation with the instrument in the patient's oral cavity.

A stomatological tip is known from RF patent #2,030,904 published on March 20, 1995, comprising a grip-body provided with gas inlet and outlet ducts, a head having a body protruding sideways from the grip-body, said head rotatable through 360° in a sagittal plane by means of a swivel sleeve provided in the grip-body of the tip and engageable on side with a worm gearing mounted in the grip-body and on the other side, with a pinion gear coupled to the head body, a turbine accommodated in the head and journalled in bearings. In the known tip stomatological instruments are mounted in a collet holder provided with a control push-button, said holder being connected to the turbine and has a common pivot axis therewith, said push-button being disposed on the head outer surface.

The stomatological instrument disclosed in RF patent #2,030,904 suffers from the same disadvantages as are inherent in the stomatological tip disclosed in application #96/101,748. Moreover, provision of a push-button on the head of the stomatological tip involves increased overall dimensions thereof.

Use of a collet holder for stomatological instruments in the present stomatological tip provides for retaining and unblocking the instrument therein on the side of the work field, whereby miniaturization of the head itself is achieved, since to unblock the appliance holding the stomatological instrument in traditionally used tips use is made of a push-button located on the head which adds to a longitudinal and cross-sectional dimension of the entire structure, thus rendering manipulations in patient's oral cavity less convenient and increasing the danger of injuring the patient.

### Summary of the Invention

An object of the present invention is to provide a stomatological tip having a swivel head lying within the clearance limits of the tip, a collet holder having a control push-button located inside the head, thereby making it possible to substantially extend applicability of stomatological instruments and to considerably facilitate manipulating therewith in the patient's oral cavity.

When disclosing the essence of the herein-proposed utility model use is made of the term "gas" as a generic feature. The technical solution proposed herein is suitable for operation with any gaseous mixtures, though the gas most commonly used in stomatological practice is gas or a variety of water-gas mixtures.

Therefore in the frame of the present specification of invention the concepts "air", "gas" and "working fluid" are assumed to be equivalent.

The object stated before is accomplished due to the fact that the stomatological tip proposed herein comprises a head accommodating a turbine with a means for holding a stomatological instrument and at least one hole for gas admission to said turbine, a tip body having a socket for said head to receive, a gas admission duct communicating with a gas supply line, said socket for said hole being capable of providing a complete revolution of said head, and said means for holding a stomatological instrument appears as a collet holder having a control push-button, wherein according to the invention, said tip is furnished with a valve, an intermediate duct provided in said head, an additional duct provided in said tip body and having its outlet communicating with the inlet of said intermediate duct, said control push-button is accommodated inside said head, said control push-button has a surface to be pushed down and a surface for said clamping blades of said collet holder to open, and a hollow space is established confined between the inner surface of said head and said push-down surface of said control push-button, said hollow space communicating with the outlet of said intermediate duct, said gas supply line being adapted for communicating, via said valve, with the inlet of said additional duct, and said outlet of said additional duct and said inlet of said intermediate duct communicate with each other via a groove, with said head assuming any position while rotating, said groove is made on the inner surface of said socket for said head, or on the outer surface of the portion of said head.

The hole for gas admission to the turbine may appear as a nozzle.

To render manipulating with the stomatological tip easier and reduce the danger of injuring the patient's oral cavity, the outer surface of the tip body round the head socket and the outer head surface may be so made as to form conjointly a solid of revolution.

The valve may be provided with a washer and a handle and be accommodated inside the tip body.

### Brief Description of the Drawings

The construction arrangement of the proposed stomatological tip is illustrated with reference to the accompanying drawings, wherein:
FIG.1 is a general view of the stomatological instruments, according to the invention; and
FIG.2 a sectional view of the stomatological instruments, according to the invention.

### Description of the Preferred Embodiment

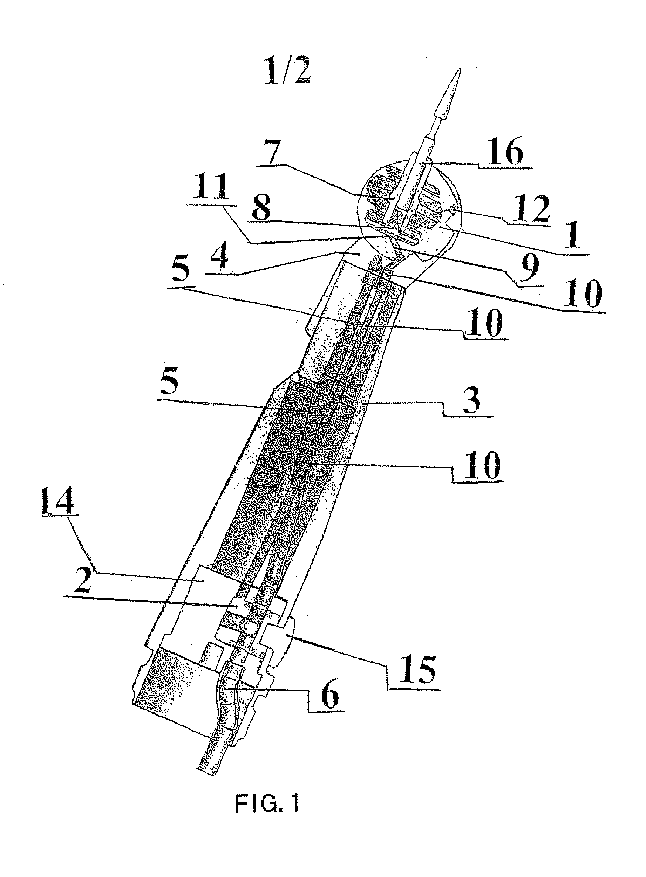

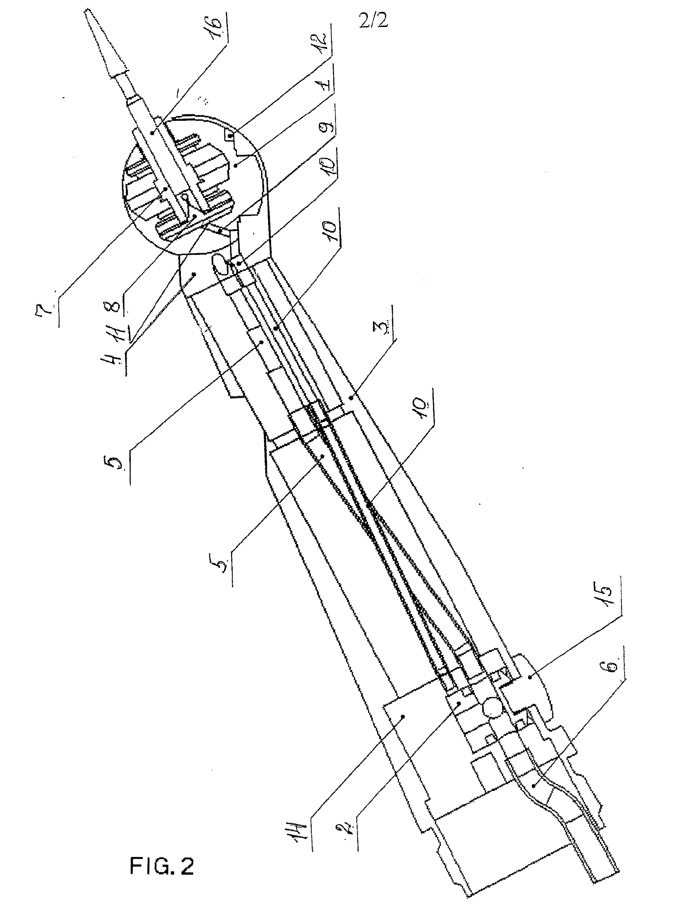

The stomatological tip comprises a head 1 (FIGS.1, 2) which accommodates a turbine (not shown) with a means for holding a stomatological instrument, at least one hole (not shown) for gas admitting to the turbine, and a valve 2. A body 3 of the tip has a socket 4 for the head 1 to receive and a gas admission duct 5 communicating with a gas supply line 6. The socket 4 for the head 1 to receive is adapted to provide a possibility for the head 1 to make a complete revolution. The means for holding a stomatological instrument appears as a collet holder 7 having a control push-button 8. The control push-button 8 is located inside the head 1. The control push-button 8 has a surface to be pushed down to actuate the push-button 8 and a surface for the clamping blades of the collet holder 7 to open.

An intermediate duct 9 is made in the head 1 and an additional duct 10 is provided in the tip body 3 and communicates, via the outlet thereof, with the inlet of the intermediate duct 9. A hollow space 11 is provided which is confined between an inner surface of the head 1 and a surface to be pushed down to actuate the push-button 8 and communicate with the outlet of the intermediate duct 9. The gas supply line 6 is adapted to communicate, via the valve 2, with the inlet of the additional duct 10. The outlet of the additional duct 10 and the inlet of the intermediate duct 9 communicate with each other via a groove 12, with the head 1 assuming any position while rotating. The groove 12 is made on the inner surface of the socket 4 for the head 1 to receive, or on the outer surface of the portion of the head 1 disposed inside the socket 4.

The hole for gas admission to the turbine may appear as a nozzle.

To render manipulating with the stomatological tip easier and reduce the danger of injuring the patient's oral cavity operated upon, the outer surface of the socket 4 of the head 1 and the outer surface of the tip body may so be made as to form conjointly a solid of revolution.

The valve 2 may be provided with a washer 14 and a knob 15 and be accommodated inside the tip body 3.

The stomatological tip proposed herein functions as follows.

Gas is admitted to pass to the turbine via the gas admission duct 5 communicating with the gas supply line 6 and the nozzle, and actuates the turbine to accelerate it to the required rotation speed. A stomatological instrument 16 is set in operation after having been definitely oriented, together with the head 1, with respect to the body 3. Upon turning the valve 2 gas ceases to pass to the gas admission duct 5 and starts flowing along the additional duct 10 and via the groove 12, to the intermediate duct 9 and further on to the space 11 confined between the inner surface of the head 1 and the surface to be pushed down to actuate the push-button 8. As a result, gas pressure is applied to the surface. The surface in turn actuates the collet holder 7 which opens, too, to release the stomatological instrument 16 for its being subsequently withdrawn.

### Industrial Applicability

The present invention can find use in medical engineering as stomatological tips. The invention proposed herein is favorably comparable with the prototype and other heretofore known technical solutions due to having a number of advantages thereover, that is: provision of a stomatological tip having a swivel head which substantially lies within the clearance limits of the tip, a collet holder having a control push-button disposed in the head, higher performance reliability, substantially extending capability of stomatological instruments and easier manipulating therewith in the patient's oral cavity.

## Claims

1. A stomatological tip comprising a head accommodating a turbine with a means for holding a stomatological instrument and at least one hole for gas admission to said turbine, a tip body having a socket for said head to receive, a gas admission duct communicating with a gas supply line, said socket for said hole being capable of providing a complete revolution of said head and said means for holding a stomatological instrument appears as a collet holder having a control push-button, **CHARACTERIZED in that** said tip is furnished with a valve, an intermediate duct provided in said head, an additional duct provided in said tip body and having its outlet communicating with the inlet of said intermediate duct, said control push-button is accommodated inside said head, said control push-button has a surface to be pushed down and a surface for said collet holder to open, and a hollow space is established, confined between the inner surface of said head and said push-down surface of said control push-button, said hollow space communicating with the outlet of said intermediate duct, said gas supply line being adapted for communicating, via said valve, with the inlet of said additional duct, and said outlet of said additional duct and said inlet of said intermediate duct communicate with each other via a groove, with said head assuming any position while rotating, said groove is made on the inner surface of said socket for said head, or on the outer surface of that portion of said head.

2. A stomatological tip as claimed in claim 1, wherein said hole for gas admission to the turbine appears as a nozzle.

3. A stomatological tip as claimed in claim 1, wherein the outer surface of said socket and the outer surface of said portion of said head extending from said socket form conjointly a solid of revolution.

4. A stomatological tip as claimed in claim 1, wherein said valve is accommodated inside said longitudinal body and is provided with a washer and a knob.
